# EUROPEAN PATENT APPLICATION

(11) **EP 4 258 586 A1**
(43) Date of publication of application: **11.10.2023**
(21) Application number: 22739129.9
(22) Date of filing: 14.01.2022
(51) Int. Cl.: H04L 5/00

(54) **UPLINK TRANSMISSION METHOD, TERMINAL, AND NETWORK SIDE DEVICE**

(30) Priority: 14.01.2021 CN 202110048896
(71) Applicant: Vivo Mobile Communication Co., Ltd., Dongguan, Guangdong 523863 (CN)
(72) Inventor: WANG, Yong, Dongguan, Guangdong 523863 (CN); WU, Kai, Dongguan, Guangdong 523863 (CN)
(74) Representative: Murgitroyd & Company
(86) International application number: PCT/CN2022/072064
(87) International publication number: WO 2022/152254

(57) **Abstract**

The embodiments of the present application disclose an uplink transmission method, a terminal, and a network side device, which belong to the technical field of wireless communication. The method includes: determining, by the terminal, a first duration according to first information; and performing multiple first uplink transmissions on a first serving cell based on the first duration, where the multiple first uplink transmissions meet a predetermined requirement.

## Description

### CROSS-REFERENCE

The present invention claims priority to Chinese Patent Application No. 202110048896.0, filed with the China National Intellectual Property Administration on January 14, 2021, and entitled "UPLINK TRANSMISSION METHOD, TERMINAL, AND NETWORK SIDE DEVICE", which is incorporated herein by reference in its entirety.

### TECHNICAL FIELD

The present application belongs to the technical field of wireless communication, and specifically relates to an uplink transmission method, a terminal, and a network side device.

### BACKGROUND

In wireless communication technologies, if a network side device can perform joint demodulation reference signal (Demodulation Reference Signal, DMRS) channel estimation based on multiple uplink transmissions, the performance of uplink reception can be effectively improved.

However, there is currently no uplink transmission solution that can support joint DMRS channel estimation.

### SUMMARY

The embodiments of the present application provide an uplink transmission method, a terminal, and a network side device, which can solve the problem that there is currently no uplink transmission solution that can support joint DMRS channel estimation.

In a first aspect, there is provided an uplink transmission method, performed by a terminal. The method includes: determining a first duration according to first information; and performing multiple first uplink transmissions on a first serving cell based on the first duration, where the multiple first uplink transmissions meet a predetermined requirement; and the first information includes at least one of the following: a number of time units indicated by the network side device; a number of retransmissions of the first uplink transmissions indicated by the network side device; a number of continuous/quasi-continuous time units occupied by at least one of the multiple first uplink transmissions; a configured uplink/downlink resource configuration; a time domain resource length of a nominal transmission of a specified channel, where the specified channel includes a physical uplink shared channel PUSCH and/or a physical uplink control channel PUCCH; a specified time resource, where the specified time resource is a corresponding time domain resource for determining a demodulation reference signal DMRS for the first uplink transmission; and terminal capability information.

In a second aspect, there is provided an uplink transmission method, performed by a network side device. The method includes: receiving multiple first uplink transmissions performed by a terminal on a first serving cell based on a first duration, where the multiple first uplink transmissions meet a predetermined requirement; the first duration is determined based on first information, and the first information includes at least one of the following: a number of time units indicated by the network side device; a number of retransmissions of the first uplink transmissions indicated by the network side device; a number of continuous/quasi-continuous time units occupied by at least one of the multiple first uplink transmissions; a configured uplink/downlink resource configuration; a time domain resource length of a nominal transmission of a specified channel, where the specified channel includes a physical uplink shared channel PUSCH and/or a physical uplink control channel PUCCH; a specified time resource, where the specified time resource is a corresponding time domain resource for determining a demodulation reference signal DMRS for the first uplink transmission; and terminal capability information.

In a third aspect, there is provided an uplink transmission apparatus, including: a determining module, configured to determine a first duration according to first information; and a transmission module, configured to perform multiple first uplink transmissions on a first serving cell based on the first duration, where the multiple first uplink transmissions meet a predetermined requirement; and the first information includes at least one of the following: a number of time units indicated by the network side device; a number of retransmissions of the first uplink transmissions indicated by the network side device; a number of continuous/quasi-continuous time units occupied by at least one of the multiple first uplink transmissions; a configured uplink/downlink resource configuration; a time domain resource length of a nominal transmission of a specified channel, where the specified channel includes a physical uplink shared channel PUSCH and/or a physical uplink control channel PUCCH; a specified time resource, where the specified time resource is a corresponding time domain resource for determining a demodulation reference signal DMRS for the first uplink transmission; and terminal capability information.

In a fourth aspect, there is provided an uplink transmission apparatus, including: a receiving module, configured to receive multiple first uplink transmissions performed by a terminal on a first serving cell based on a first duration, where the multiple first uplink transmissions meet a predetermined requirement; the first duration is determined based on first information, and the first information includes at least one of the following: a number of time units indicated by the network side device; a number of retransmissions of the first uplink transmissions indicated by the network side device; a number of continuous/quasi-continuous time units occupied by at least one of the multiple first uplink transmissions; a configured uplink/downlink resource configuration; a time domain resource length of a nominal transmission of a specified channel, where the specified channel includes a physical uplink shared channel PUSCH and/or a physical uplink control channel PUCCH; a specified time resource, where the specified time resource is a corresponding time domain resource for determining a demodulation reference signal DMRS for the first uplink transmission; and terminal capability information.

In a fifth aspect, a terminal is provided, where the terminal includes a processor, a memory, and a program or an instruction stored in the memory and executable on the processor, where when the program or instruction is executed by the processor, steps of the method according to the first aspect are implemented.

In a sixth aspect, a network side device is provided, where the network side device includes a processor, a memory, and a program or an instruction stored in the memory and executable on the processor, and when the program or the instruction is executed by the processor, steps of the method according to the second aspect are implemented.

In a seventh aspect, a readable storage medium is provided, where the readable storage medium stores a program or an instruction, and when the program or the instruction is executed by a processor, steps of the method according to the first aspect or the second aspect are implemented.

In an eighth aspect, a chip is provided. The chip includes a processor and a communications interface, where the communications interface is coupled to the processor, and the processor is configured to run a program or an instruction of a network side device, to implement the method in the first aspect, or the method in the second aspect.

In a ninth aspect, a computer program product is provided. The computer program product includes a processor, a memory, and a program or an instruction that is stored in the memory and that can run on the processor, where when the processor or the instruction is executed by the processor, the steps of the method in the first aspect or the second aspect are implemented.

In this embodiment of the present application, the terminal determines the first duration according to the first information, and then performs multiple first uplink transmissions on the first serving cell based on the first duration, where the multiple first uplink transmissions meet the predetermined requirement. Therefore, the power and phase of the multiple first uplink transmissions can be kept continuous within the first duration, so that the network side device can perform joint DMRS channel estimation based on the received uplink transmissions, effectively improving uplink transmission performance.

### BRIEF DESCRIPTION OF DRAWINGS

FIG. 1 is a schematic structural diagram of a wireless communication system provided by an exemplary embodiment of the present application;
FIG. 2a is a schematic flowchart of an uplink transmission method provided by an exemplary embodiment of the present application;
FIG. 2b to FIG. 2e are respectively schematic diagrams of slot structures provided by different exemplary embodiments of the present application;
FIG. 3 is a schematic flowchart of an uplink transmission method provided by another exemplary embodiment of the present application;
FIG. 4a to FIG. 4b are respectively schematic diagrams of slot structures provided by different exemplary embodiments of the present application;
FIG. 5a is a schematic flowchart of an uplink transmission method provided by still another exemplary embodiment of the present application;
FIG. 5b is a schematic diagram of a slot structure provided by still another exemplary embodiment of the present application;
FIG. 6 is a schematic flowchart of an uplink transmission method provided by still another exemplary embodiment of the present application;
FIG. 7 is a block diagram of an uplink transmission apparatus provided by an exemplary embodiment of the present application;
FIG. 8 is a block diagram of an uplink transmission apparatus provided by another exemplary embodiment of the present application;
FIG. 9 is a block diagram of a terminal provided by an exemplary embodiment of this application; and
FIG. 10 is a block diagram of a network side device provided by an exemplary embodiment of this application.

### DESCRIPTION OF EMBODIMENTS

The following clearly describes technical solutions in embodiments of this application in conjunction with the accompanying drawings in the embodiments of this application. Clearly, the described embodiments are some but not all of the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects instead of describing a specific order or sequence. It is to be understood that the terms so used are interchangeable under appropriate circumstances such that the embodiments of the application can be implemented in sequences other than those illustrated or described herein, and "first" and "second" generally distinguish objects of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6th generation (6th Generation, 6G) communications system.

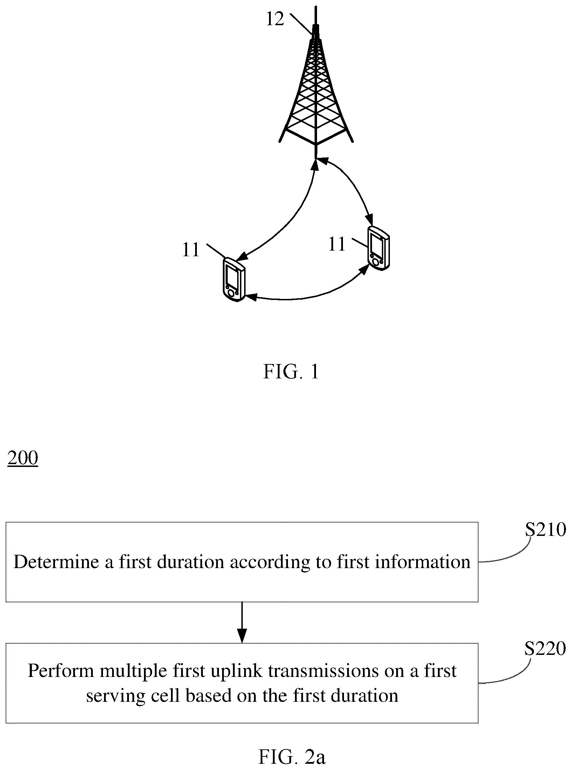

FIG. 1 is a block diagram of a wireless communications system to which an embodiment of this application can be applied. The wireless communications system includes a terminal 11 and a network side device 12. The terminal 11 may be referred to as a terminal device or user equipment (User Equipment, UE). The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable device), vehicle user equipment (VUE), and pedestrian user equipment (PUE). The wearable device includes a bracelet, a headset, and glasses. It should be noted that a specific type of the terminal 11 is not limited in this embodiment of this application. The network side device 12 may be a base station or a core network. The base station may be referred to as a node B, an evolved node B, an access point, a base transceiver station (BTS), a radio base station, a radio transceiver, a basic service set (BSS), an extended service set (ESS), a node B, an evolved node B (eNB), a home node B, a home evolved node B, a wireless local area network (WLAN) access point, a wireless fidelity (WiFi) node, a transmitting receiving point (TRP), or other appropriate terms in the art. As long as a same technical effect is achieved, the base station is not limited to a specified technical term. It should be noted that, in embodiments of the present application, only a base station in the NR system is used as an example, but a specific type of the base station is not limited.

In conjunction with the accompanying drawings, the technical solutions provided in the embodiments of this application are described in detail by using specific embodiments and application scenarios.

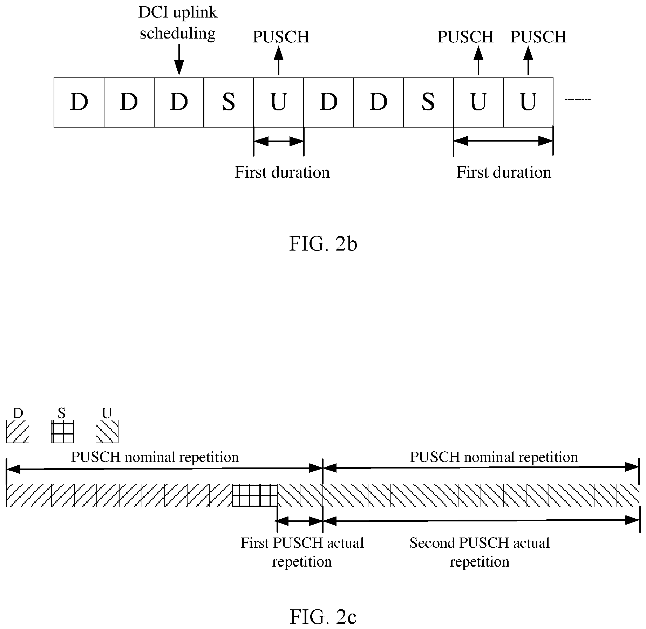

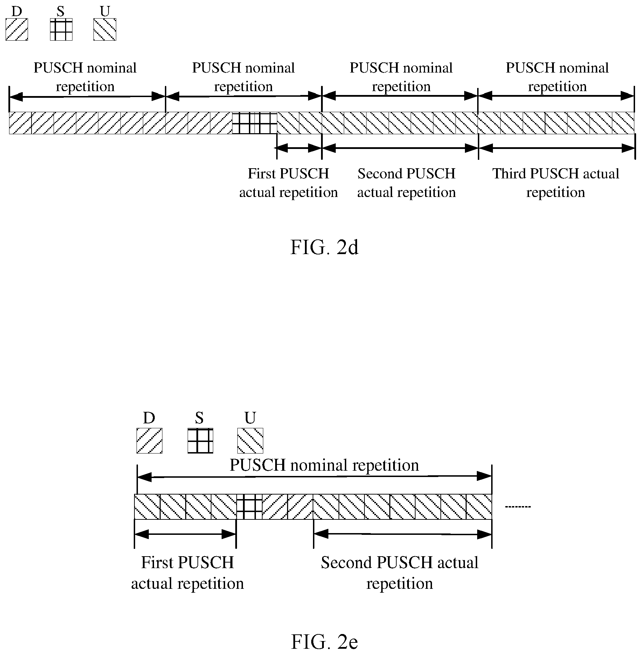

FIG. 2 is a schematic flowchart of an uplink transmission method 200 provided by an exemplary embodiment of the present application. The method 200 may be executed by a terminal, for example, may be executed by hardware and/or software installed in the terminal. The method 200 may include the following steps.

S210. Determine a first duration according to first information.

The first duration is a time for the terminal to maintain power and/or phase continuity during one or more uplink transmissions. In this embodiment, the first information may include at least one of the following (1) to (7).
(1) The number of time units indicated by the network side device.

The time unit may be a slot (slot), a sub-slot (sub-slot), a symbol (symbol), a subframe (subframe), a radio frame (frame) and the like.

Exemplarily, assuming that the first duration is determined only based on (1), the first duration may be equal to the number of time units indicated by the network side device, for example, the number of time units indicated by the network side device is L, such as 2 slots, and the first duration is 2 slot.

It should be noted that the "time unit" mentioned in the subsequent embodiments may be a slot, a sub-slot, a symbol, a subframe, a radio frame, etc., and details will not be described later.

(2) The number of retransmissions of the first uplink transmissions indicated by the network side device.

Assuming that the number of retransmissions of the first uplink transmissions indicated by the network side device is N, and the first duration is determined only based on (2), the first duration may be the number of time units corresponding to N retransmissions of the first uplink transmissions.

(3) The number of continuous/quasi-continuous time units occupied by at least one of the multiple first uplink transmissions.

The continuous/quasi-continuous meets the requirement of at least one of the following (3 a) to (3e).

(3a) A gap time on a time domain resource is not greater than a third threshold.

(3b) A gap time on a time domain resource is not greater than a predetermined symbol number threshold.

(3c) A number of gaps on a time domain resource is not greater than a fourth threshold.

(3d) A number of gaps on a time domain resource is not greater than the longest time of the first duration reported by the terminal.

(3e) There is no gap on a time domain resource, that is, in the absence of a gap, it can be considered continuous.

In the foregoing (3a) to (3e), the gap may be located at a middle location or other locations on the time domain resource. The time domain resource may be understood as one or more time domain resources corresponding to the first uplink transmission, for example, in the case that the time domain resource is a time domain resource corresponding to one first uplink transmission, the gap may be located at the middle location of the first uplink transmission, etc.; when the time domain resource is a time domain resource corresponding to multiple first uplink transmissions, the gap may be located between two adjacent first uplink transmissions, or on any one of the multiple first uplink transmissions, which is not limited herein.

In addition, the size of the gap, the third threshold, the symbol number threshold, and the fourth threshold may be configured by the network side or stipulated by a protocol, and are not limited herein.

In an implementation manner, if the first duration is determined based on the number of consecutive/quasi-continuous time units occupied by at least one of the multiple first uplink transmissions shown in (3), when multiple first uplink transmissions are subsequently performed based on the first duration, the first uplink transmissions performed within the number of continuous/quasi-continuous time units may use frequency domain resources at the same location.

(4) Configured uplink/downlink resource configuration.

The uplink/downlink resource configuration can be configured by the network side, for example, configuration of uplink symbols (U), configuration of downlink symbols (D) or configuration of flexible symbols (S), time division multiplexing (Time Division Duplex, TDD ) uplink and downlink slot configuration, etc.

(5) A time domain resource length of a nominal (nominal) transmission of a specified channel.

The time domain resource length may be, but is not limited to, greater than 1 slot, and the specified channel includes a physical uplink shared channel (Physical Uplink Shared Channel, PUSCH) and/or a physical uplink control channel (Physical Uplink Control Channel, PUCCH).

(6) Specified time resource.

The specified time resource is a corresponding time domain resource for determining a demodulation reference signal (Demodulation Reference Signal, DMRS) for the one or more first uplink transmissions. In this embodiment, the DMRS may include at least one of DMRSs in DMRS bundling, DMRS sharing, or other DMRS optimization transmission methods. In addition, the "time domain resource corresponding to the DMRS" may be understood as: a time domain resource used to determine the transmission of the DMRS, instead of a time domain resource actually occupied by the DMRS.

Exemplarily, assuming that the first duration is determined only based on (6), if the multiple uplink transmissions use DMRS bundling and/or DMRS sharing and/or perform DMRS transmission optimization in time domain/frequency domain resources, the terminal regards its corresponding time resource as the first duration.

(7) Terminal capability information.

The terminal determines the first duration according to the terminal capability information, which can also be understood as: if the network side device does not indicate the first duration, the terminal determines the first duration according to the terminal capability information; if the first duration indicated by the network side device exceeds the first duration determined according to the terminal capability information, the first duration determined by the terminal according to the terminal capability information is the first duration.

Exemplarily, if the duration of multiple consecutive first uplink transmissions exceeds the capability of the terminal (which also can be understood as the user), the terminal is not required to keep the power and phase continuity (Power and Phase continuity) of the multiple uplink transmissions; or if the power and phase continuity of multiple uplink transmissions are guaranteed by the network side device, that is, the user does not expect multiple continuous uplink transmissions to be scheduled or configured, the first duration exceeds the capability of the user.

It should be noted that the first duration may be determined based on any one of (1) to (7), or may be determined based on two or more of (1) to (7). In the case that the first duration is determined based on two or more of (1) to (7), the first duration may be any one of the following (a) to (b).
(a) A specified value of at least two first time length values.

The specified value is a maximum value or a minimum value, and each of the first time length values corresponds to different information in the first information. For example, it is assumed that there are two first time length values, that is, a first length value corresponding to a time domain resource length of the nominal transmission of the specified channel, and a second length value corresponding to the specified time resource, and the first length value is greater than the second length value. In this case, if the specified value is the maximum value, the first duration is the first length value corresponding to the time domain resource length of the nominal transmission of the specified channel.

(b) The intersection between at least two second times.

Each of the second times corresponds to different information in the first information. In this embodiment, according to the fact that the second time corresponds to different information in the first information, the second time may be a time length or a time range, which is not limited herein. For example, in the case that the second time is a time range, assuming that there are two second times, that is, (al, a2) and (bl, b2), the first duration may be the intersection between ( al, a2) and (bl, b2).

Based on the foregoing description of the determination method of the first duration, the determination of the first duration will be further explained below in conjunction with FIG. 2b to FIG. 2e, where "U" represents an uplink time unit, "D" represents a downlink time unit, and "S" indicates a flexible time unit.

As shown in FIG. 2b, assuming that the current frame structure is "DDDSUDDSUU", the second time is the time corresponding to the (2) and (4) respectively, and the first uplink transmission PUSCH is retransmitted in the uplink slot (that is, "U" in FIG. 2b), the first duration may be the time unit corresponding to the first "U" shown in FIG. 2b.

In addition, the network side device may also indicate that the first duration is the number of retransmission as a unit, for example, the time length corresponding to two retransmissions is used as the first duration, and the frame structure is considered.

As shown in FIG. 2c, in the "DDDSU" frame structure, the symbol composition of the 14 symbols of the " S" slot includes 2 uplink symbols, that is, the last two symbols, and the terminal performs transmission on 2+14 uplink symbols, that is, the last 2 symbols of the " S" slot and the 14 symbols of the "U" slot shown in FIG. 2c. In this case, the terminal may use consecutive (2+14) uplink symbols as the first duration, and this behavior may be indicated by the network side device or predefined.

Alternatively, the network side device configures the first duration to be 2 slots, but the actual first duration is less than two slots, then the first duration is the minimum value (min) among (2 slots, number of consecutive symbols).

Alternatively, as shown in FIG. 2d, the first duration configured by the network side device is 1 slot, each slot may include nominal transmissions of 2 PUSCHs (that is, the "Nominal PUSCH repetition" shown in FIG. 2d), and the time length of the retransmission is 2+14 symbols, the first duration may be the maximum value (max) in (1 slot, number of consecutive symbols).

Alternatively, as shown in FIG. 2e, the length of the nominal PUSCH retransmission configured by the network side device is 1 slot (14 symbols). Due to the division of downlink transmission, one nominal retransmission in one slot is divided into two actual retransmissions. It may be preset or the network indicates that the first duration is the length of the nominal PUSCH retransmission, or is greater than or equal to the length. However, if the actual number of consecutive symbols is 4 or 7, the first duration may be the minimum value of (1 slot/nominal PUSCH length (nominal PUSCH length), and a number of consecutive symbols). Alternatively, it can be understood as the intersection of the duration of the nominal retransmission and the number of consecutive symbols.

It should be noted that
(1) The PUSCH is only one possible uplink transmission, that is, the method of determining the first duration shown in FIG. 2b to FIG. 2e can also be applied to other uplink transmissions such as the PUCCH.
(2) The PUSCH is retransmission and may also be PUSCH/PUCCH transmission across multiple slots, and the multiple slots may be continuous or discontinuous.
(3) The solutions described in (1), (2), (3), and (5) included in the first information can also be implemented independently, for example, for the FDD frequency band (paired spectrum), continuous uplink and downlink transmission can be performed.

S220. Perform multiple first uplink transmissions on a first serving cell based on the first duration, where the multiple first uplink transmissions meet a predetermined requirement.

The multiple first uplink transmissions meeting the predetermined requirement during the first duration may be understood as: the power and phase of the multiple first uplink transmissions supported by the terminal are continuous, so that the network side device may perform joint DMRS channel estimation based on the multiple first uplink transmissions to improve uplink transmission performance. In this embodiment, the predetermined requirement may be configured by the network side device or stipulated in a protocol, which is not limited herein.

In the uplink transmission method, the first uplink transmission may include at least one of a PUCCH, a PUSCH, a physical random access channel (Physical Random Access Channel, PRACH), and a sounding reference signal (Sounding Reference Signal, SRS).

In addition, the first uplink transmission may include continuous transmission of at least one channel and/or signal. For example, the first uplink transmission may only include a PUCCH, or may include a PUCCH and a PUSCH, which is not limited herein.

In this embodiment of the present application, the terminal determines the first duration according to the first information, and then performs multiple first uplink transmissions on the first serving cell based on the first duration, where the multiple first uplink transmissions meet the predetermined requirement. Therefore, the power and phase of the multiple first uplink transmissions can be kept continuous within the first duration, so that the network side device can perform joint DMRS channel estimation based on the received uplink transmissions, effectively improving uplink transmission performance.

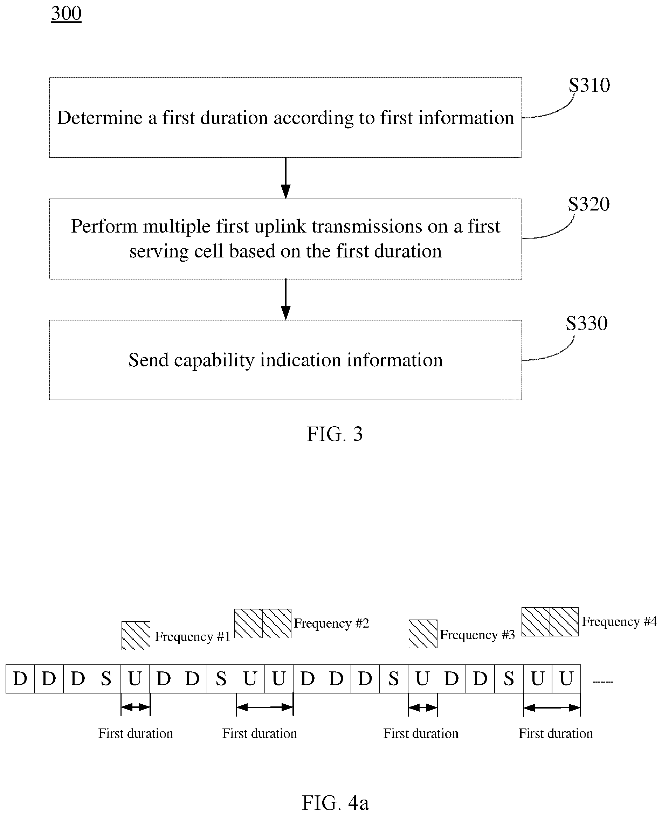

FIG. 3 is a schematic flowchart of an uplink transmission method 300 provided by an exemplary embodiment of the present application. The method 300 may be executed by a terminal, for example, may be executed by hardware and/or software installed in the terminal. The method 300 may include the following steps.

S310. Determine a first duration according to first information.

For the implementation process in S310, reference may be made to the relevant description in the foregoing method 200. To avoid repetition, details are not repeated herein.

S320. Perform multiple first uplink transmissions on a first serving cell based on the first duration, where the multiple first uplink transmissions meet a predetermined requirement.

For the implementation process of S320, in addition to referring to the relevant description in the foregoing method 200, as a possible implementation manner, when the terminal performs multiple first uplink transmissions based on the first duration, the start moment of the first duration may be the start moment of the first uplink transmission; or the start moment of the first duration is the start moment of the time unit where the first uplink transmission is located.

In addition, the first uplink transmissions transmitted within the first duration use a same first transmission parameter, that is, the terminal does not change transmit power according to a received transmit power control (Transmit Power Control, TPC) command, and does not adjust the transmit power according to a path loss (pathloss) reference signal (Reference Signal, RS) indicated by the network, and the like.

The first transmission parameter may include at least one of a transmit power, a transmit filter, a precoding mode, an antenna mapping mode, a modulation scheme, and a sending waveform corresponding to the first uplink transmission. As the first uplink signal is different, the signal waveform is different. For example, when the first uplink transmission is PUCCH format 0/1/3/4, the signal waveform can be considered as a discrete Fourier transform-spread frequency orthogonal frequency division multiplexing (Discrete Fourier Transform-Spread Orthogonal Frequency Division Multiplexing, DFT-S-OFDM) waveform; when the first uplink transmission is PUCCH format 2, the signal waveform can be considered as a cyclic prefix orthogonal frequency division multiplexing (Cyclic Prefix Orthogonal Frequency Division Multiplexing, CP-OFDM) waveform; and when the first uplink transmission is a PRACH, the signal waveform may be considered as a DFT-S-OFDM waveform.

Exemplarily, assuming that the first transmission parameter is transmit power, within the first duration, the terminal keeps the transmit power unchanged; even if the path loss measured by the terminal changes, the terminal will not change the transmit power within the first duration; or even if the terminal receives a TPC command (command), the terminal will not adjust the transmit power according to the TPC command within the first duration; or even if the terminal receives an updated path loss reference RS update indication, the terminal will not adjust the transmit power according to the updated reference RS measurement value within the first duration.

In addition, if the transmission parameter in the uplink transmission process needs to be adjusted, a second transmission parameter corresponding to the first uplink transmission may be adjusted by using the first duration as a time unit, where the second transmission parameter may include at least one of a transmit power, a transmit filter, a precoding mode, an antenna mapping mode, and a modulation scheme of the first uplink transmission.

Exemplarily, the terminal may adjust the transmit power according to the updated path loss measurement, the TPC command, the power control reference signal, or the like after completing the first uplink transmission within a first duration.

It should be noted that the first transmission parameter and the second transmission parameter may be the same or different, which is not limited herein.

In yet another implementation manner, time lengths of first durations corresponding to at least some of the multiple first uplink transmissions are different; or time lengths of the first durations corresponding to the multiple first uplink transmissions are the same.

Further, in this embodiment, the predetermined requirement may include at least one of the following (1) to (7).

(1) A channel of a second uplink transmission is determined according to a channel of a third uplink transmission, the second uplink transmission is any one of the multiple first uplink transmissions, and the third uplink transmission is an uplink transmission of the multiple first uplink transmissions other than the second uplink transmission.

(1) can be understood as: for the multiple first uplink transmissions, the channel of one of the uplink transmissions can be determined based on the channels of other uplink channel transmissions. In this embodiment, the "determining" can also be understood as inferring (infer), prediction, or the like.

Exemplarily, it is assumed that the multiple first uplink channels include a first uplink channel c1, a second uplink channel c2, a third uplink channel c3, and a fourth uplink channel c4, and channels corresponding to the first uplink channel c1, the second uplink channel c2, and the third uplink channel c3 are known. In this case, the channel of the fourth uplink channel c4 may be determined based on a channel corresponding to at least one of the first uplink channel c1, the second uplink channel c2, and the third uplink channel c3.

(2) The multiple first uplink transmissions use a same antenna port.

(3) Phases between the multiple first uplink transmissions are continuous.

(4) Differences between transmit powers corresponding to the multiple first uplink transmissions is smaller than a first threshold.

The first threshold may be configured by a network side device or stipulated by a protocol, such as detaP1.

(5) The multiple first uplink transmissions correspond to a same transmit filter.

(6) The multiple first uplink transmissions correspond to a same precoding mode.

(7) Differences between DMRSs corresponding to the multiple first uplink transmissions and data transmission symbols are smaller than a second threshold.

The data transmission symbols can be understood as other information symbols other than the DMRS, such as useful information symbols. The difference may be a power difference, and the second threshold may be configured by the network side device or stipulated in a protocol, such as 0B, 3dB, 4.77dB, and detaP2. In this case, the multiple first uplink transmissions meeting the predetermined requirement may be: the power differences between the DMRSs corresponding to the multiple first uplink transmissions and the useful symbols are OdB or less than or equal to detaP2. This is not limited in this embodiment herein.

It can be understood that, in this embodiment, the predetermined requirement may include one or more of the foregoing (1) to (7), which is not limited herein.

It should be noted that, in a case that the terminal is scheduled or configured with an uplink transmission with a specified priority on the first serving cell, and/or in a case that the terminal receives a specified instruction, the multiple first uplink transmissions may not be required to meet the predetermined requirement. The specified priority may be a high priority, and the specified instruction may include a dynamic slot format indication (dynamic Slot Format Indication, dynamic SFI) and/or an uplink conflict indication (Uplink Conflict Indication, UL CI).

Exemplarily, if the terminal is scheduled or configured with a high-priority PUSCH on the first serving cell, a PUCCH of a hybrid automatic repeat request acknowledgment (Hybrid automatic repeat request acknowledgment, HARQ-ACK) of a high-priority codebook is transmitted, so that the multiple first uplink transmissions do not meet the first duration, and the multiple first uplink transmissions are also not required to meet the predetermined requirement, such as continuous powers and phases.

In this case, in the uplink transmission method given in this embodiment, the terminal does not expect to be scheduled or configured with an uplink transmission with a specified priority on the first serving cell, and/or the terminal does not expect to receive a specified instruction.

Further, in an implementation manner, when the terminal performs multiple first uplink transmissions meeting the predetermined requirement on the first serving cell based on the first duration, the terminal may select different transmission modes, which will be described below with reference to different examples.

Example 1, assuming that the terminal needs to perform frequency hopping transmission, the first duration can be used as the granularity of the time domain, then based on the length of the first duration, frequency-domain locations for a transmission corresponding to the multiple first uplink transmissions can be determined; and finally frequency-hopping transmission is performed on multiple first uplink transmissions based on the frequency-domain locations for the transmission.

For example, if the network instructs the terminal to perform frequency hopping transmission, the terminal may determine the transmission location in the frequency domain according to the length of the first duration. Specifically, the terminal transmits in 4 first durations and 2 frequency domain locations, the frequency hopping mode of the terminal is shown in FIG. 4a below, and frequency domain transmission locations of the first duration at different start moments can be different. Alternatively, the first durations in different frequency domain locations may be different.

### Example 2

Assuming that the terminal needs to perform uplink transmission according to the DMRS, the terminal may determine a DMRS transmission pattern (pattern) for each of the first uplink transmissions based on the length of the first duration, and then transmit multiple first uplink transmissions based on the DMRS transmission pattern.

For example, the terminal determines the number of DMRS symbols in the first duration according to the number of slots and/or symbols in the first duration, or the number of DMRS symbols in each slot/nominal (actual) PUSCH repetition in the first duration.

Exemplarily, in the related technical solution, the DMRS pattern is determined according to the number of transmission symbols of 1 PUSCH, and when multiple first uplink (here mainly PUSCH and/or PUCCH) transmissions are supported within the first duration and the predetermined requirement is met, joint channel estimation of multiple transmissions can be supported, and it can be considered that the overheads of DMRS are reduced to increase the code rate of transmission.

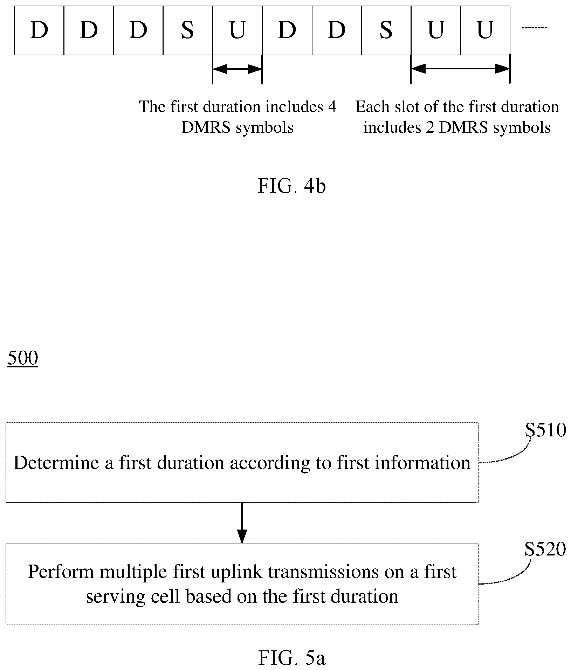

In this embodiment, as shown in FIG. 4b, when the first durations are different, the number of DMRS symbols contained in each slot may be different. In a PUSCH transmission with only 1 slot in a first duration, there are 4 DMRS symbols, and in a PUSCH transmission with 2 slots in a first duration, each slot includes 2 DMRS symbols.

Alternatively, the network side device is configured with additional (additional) DMRS (the number of DMRS symbols is large) for PUSCH transmission, and when the number of PUSCH symbols for continuous transmission is greater than a threshold M, PUSCH transmission is performed in no additional DMRS mode. That is, the terminal implicitly determines the pattern of the DMRS according to the length of the first duration.

It should be noted that whether the function of the terminal determining the DMRS transmission pattern of each first uplink transmission according to the first duration is enabled can be configured by the network side.

S330. Send capability indication information.

By sending the capability indication information, the understanding of the terminal and the network side device can be consistent, and uplink transmission performance can be ensured. In this embodiment, the capability indication information is used to indicate at least one of the following (1) to (3).
(1) Whether the multiple first uplink transmissions performed by the terminal on the first serving cell meet the predetermined requirement.
(2) The shortest time of the first duration.
(3) The longest time of the first duration.

In an implementation manner, the longest time of the first duration indicated by the capability indication information is greater than or equal to the longest time of the first duration indicated by the Alternatively network side device.

In this embodiment, the network can further use DMRSs of multiple slots for joint channel estimation.

FIG. 5a is a schematic flowchart of an uplink transmission method 500 provided by an exemplary embodiment of the present application. The method 500 may be executed by a terminal, for example, may be executed by hardware and/or software installed in the terminal. The method 500 may include the following steps.

S510. Determine a first duration according to first information.

For the implementation process of S510, reference may be made to relevant descriptions in the aforementioned methods 200 and 300, and to avoid repetition, details are not repeated herein.

S520. Perform multiple first uplink transmissions on a first serving cell based on the first duration, where the multiple first uplink transmissions meet a predetermined requirement.

For the implementation process of S520, in addition to referring to the related descriptions in the aforementioned methods 200 and 300, as a possible implementation, if the terminal is configured with multiple serving cells and the terminal starts uplink transmission in the second serving cell within the first duration, a predetermined operation is performed; that is, the terminal performs a predetermined operation if the predetermined case is satisfied while performing S520. It can be understood that the uplink transmission on the second serving cell may be performed by the network side device by performing scheduling instruction through high-level signaling (such as radio resource control (Radio Resource Control, RRC) signaling), a medium access control-control element (Medium Access Control-Control Element, MAC CE), a physical downlink control channel (Physical downlink control channel, PDCCH), and other indication information.

The predetermined case may include that the terminal performs uplink transmission in a second serving cell within the first duration. The uplink transmission may include but is not limited to a PUSCH, a PUCCH, an SRS and so on.

The predetermined operation includes at least one of the following (1) to (3).
(1) Discard uplink transmission performed on the second serving cell.
(2) Maintain the uplink transmission performed on the second serving cell. Correspondingly, the multiple first uplink transmissions performed by the terminal on the first serving cell are not required to meet the predetermined requirement.
(3) Discard a first specified transmission performed on the first serving cell, where the first specified transmission is an uplink transmission performed on an overlapping time unit, and the overlapping time unit is a time unit on which the first uplink transmission on the first serving cell overlaps with the uplink transmission on the second serving cell.

In an implementation manner, the predetermined case may further include receiving a predetermined indication and performing the predetermined operation, and the predetermined indication is used to indicate that a transmission time of the uplink transmission on the second serving cell reaches a predetermined time. The predetermined time may be configured by the network side or stipulated in a protocol. Exemplarily, the terminal may perform the predetermined operation after receiving a time length T indicated by the network side device for uplink transmission on the second serving cell.

In this embodiment, in addition to the aforementioned implementation manners, in a case that the uplink transmission corresponding to the second serving cell is a predetermined-priority transmission, or the uplink transmission corresponding to the second serving cell is a predetermined channel or signal, any one of the following (1) or (2) is performed:
(1) Maintain the uplink transmission performed on the second serving cell.
(2) Discard a first specified transmission performed on the first serving cell, where the first specified transmission is an uplink transmission performed on an overlapping time unit, and the overlapping time unit is a time unit on which the first uplink transmission on the first serving cell overlaps with the uplink transmission on the second serving cell.

The predetermined-priority transmission includes: a predetermined-priority PUSCH and/or a PUCCH transmitting a hybrid automatic repeat request acknowledgment (Hybrid automatic repeat request acknowledgement, HARQ-ACK) corresponding to a predetermined-priority codebook. The predetermined channel or signal includes at least one of a physical random access channel (Physical Random Access Channel, PRACH), a message 3 physical uplink shared channel (MSG3 PUSCH), a message-A physical uplink shared channel (MSG-APUSCH), and an SRS.

Correspondingly, in a case that the uplink transmission corresponding to the second serving cell is not a predetermined-priority transmission, and the uplink transmission corresponding to the second serving cell is not a predetermined channel or signal, the uplink transmission performed on the second serving cell is discarded.

It should be noted that, in the foregoing implementation manner, in a case that the predetermined operation is to maintain the uplink transmission performed on the second serving cell, dividing, based on the start moment of the uplink transmission performed on the second serving cell, the first duration into a first partial duration and a second partial duration, where the first uplink transmission performed between the first partial duration and the second partial duration does not meet the predetermined requirement; or the first uplink transmission performed during the first partial duration and the second partial duration continues to meet the predetermined requirement.

Correspondingly, in a case that the predetermined operation is to maintain the uplink transmission performed on the second serving cell, dividing, based on the start moment of the uplink transmission performed on the second serving cell, the first duration into a first partial duration and a second partial duration, where the first uplink transmission performed between the first partial duration meets the predetermined requirement; and/or the first uplink transmission performed during the second partial duration meets the predetermined requirement.

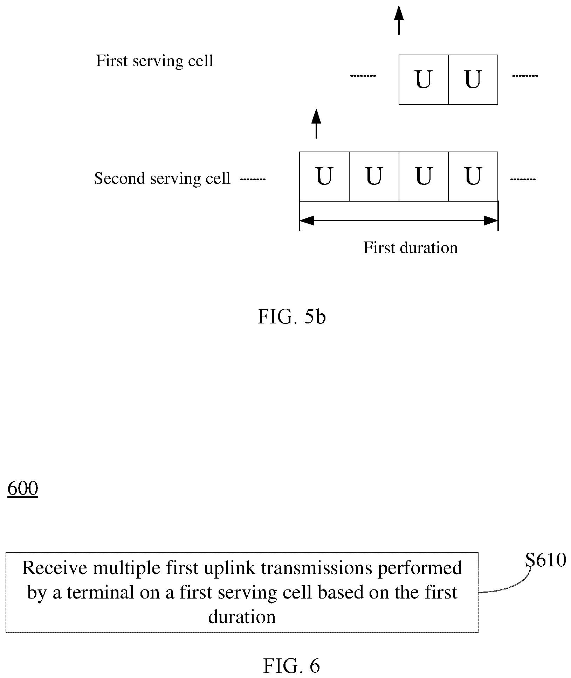

Based on the description of the foregoing method 500, the foregoing implementation manner will be further described below with reference to FIG. 5b.

Assume that the network side device configures multiple serving cells for the terminal, such as a first serving cell and a second serving cell, where the multiple serving cells are configured through carrier aggregation (Carrier Aggregation, CA) or dual connectivity (Dual Connectivity, DC).

If the terminal may need to transmit simultaneously in multiple serving cells, for example, as shown in FIG. 5b, in the process of performing multiple first uplink transmissions in a serving cell#l within the first duration, the terminal starts to perform uplink transmission in a serving cell#2. In this case, the terminal may not be able to meet the predetermined requirement within the first duration from the start moment of the uplink transmission in the serving cell#2. Therefore, the terminal can perform the predetermined operation shown in the method 500, such as at least one of (1) to (3) below.
(1) Discard uplink transmission performed on the second serving cell.
(2) Maintain the uplink transmission performed on the second serving cell. Correspondingly, the multiple first uplink transmissions performed by the terminal on the first serving cell are not required to meet the predetermined requirement.
(3) Discard a first specified transmission performed on the first serving cell, where the first specified transmission is an uplink transmission performed on an overlapping time unit, and the overlapping time unit is a time unit on which the first uplink transmission on the first serving cell overlaps with the uplink transmission on the second serving cell.

In an implementation manner, the predetermined requirement does not need to be met between the first part of uplink transmission of the serving cell#1 after the start moment of the slot/symbol n of the uplink transmission of the serving cell#2 and the second part of uplink transmission of the serving cell#1 before the end moment of the slot/symbol n-1. The predetermined requirement continues to be met during the first part of uplink transmission, and/or the predetermined requirement continues to be met during the second part of uplink transmission.

In another implementation, if the uplink transmission of the serving cell#2 is a high-priority transmission, or in the case of a specific channel/signal, (2) or (3) in the predetermined operation is performed; otherwise, (1) is performed. The high-priority transmission includes: a high-priority PUSCH, and a PUCCH transmitting a HARQ-ACK corresponding to a high-priority codebook.

In yet another implementation manner, the predetermined operation is performed after the terminal receives a time length T indicated by the network for uplink transmission in the serving cell#2. It should be noted that the network side device will not trigger the uplink transmission of the serving cell#2 as shown in FIG. 5b above within the time length T before the transmission of a first duration of the serving cell#1.

FIG. 6 is a schematic flowchart of an uplink transmission method 600 provided by an exemplary embodiment of the present application. The method 600 may be executed by a network side device, for example, may be executed by hardware and/or software installed in the network side device. The method 600 may include the following steps.

S610. Receive multiple first uplink transmissions performed by the terminal on a first serving cell based on a first duration, where the multiple first uplink transmissions meet a predetermined requirement, and the first duration is determined according to first information.

The first information includes at least one of the following (1) to (7).
(1) The number of time units indicated by the network side device.
(2) The number of retransmissions of the first uplink transmissions indicated by the network side device.
(3) The number of continuous/quasi-continuous time units occupied by at least one of the multiple first uplink transmissions.
(4) Configured uplink/downlink resource configuration.
(5) A time domain resource length of a nominal transmission of a specified channel, where the specified channel includes a physical uplink shared channel PUSCH and/or a physical uplink control channel PUCCH.
(6) A specified time resource, where the specified time resource is a corresponding time domain resource for determining a demodulation reference signal DMRS for the first uplink transmission.
(7) Terminal capability information.

In a possible implementation manner, the predetermined requirement includes at least one of the following (1) to (7).
(1) A channel of a second uplink transmission is determined according to a channel of a third uplink transmission, the second uplink transmission is any one of the multiple first uplink transmissions, and the third uplink transmission is an uplink transmission of the multiple first uplink transmissions other than the second uplink transmission.
(2) The multiple first uplink transmissions use a same antenna port.
(3) Phases between the multiple first uplink transmissions are continuous.
(4) Differences between transmit powers corresponding to the multiple first uplink transmissions is smaller than a first threshold.
(5) The multiple first uplink transmissions correspond to a same transmit filter.
(6) The multiple first uplink transmissions correspond to a same precoding mode.
(7) Differences between DMRSs corresponding to the multiple first uplink transmissions and data transmission symbols are smaller than a second threshold.

In another possible implementation manner, the being continuous/quasi-continuous meets at least one of the following requirements that: a gap time on a time domain resource is not greater than a third threshold; a gap time on a time domain resource is not greater than a predetermined symbol number threshold; a number of gaps on a time domain resource is not greater than a fourth threshold; a number of gaps on a time domain resource is not greater than the longest time of the first duration reported by the terminal; and there is no gap on a time domain resource.

In another possible implementation manner, the first uplink transmission performed within the number of continuous/quasi-continuous time units uses a frequency domain resource at a same location.

In another possible implementation manner, the first duration is any one of the following: a specified value of at least two first time length values; and an intersection between at least two second times; where each of the first time length values corresponds to different information in the first information, and each of the second times corresponds to different information in the first information.

In another possible implementation manner, the specified value is a maximum value or a minimum value.

In another possible implementation manner, a start moment of the first duration is a start moment of the first uplink transmission; or the start moment of the first duration is a start moment of a time unit where the first uplink transmission is located.

In another possible implementation manner, the first uplink transmissions transmitted within the first duration use a same first transmission parameter, and the first transmission parameter includes at least one of a transmit power, a transmit filter, a precoding mode, an antenna mapping mode, and a modulation scheme corresponding to the first uplink transmission.

In yet another possible implementation manner, time lengths of first durations corresponding to at least some of the multiple first uplink transmissions are different; or time lengths of the first durations corresponding to the multiple first uplink transmissions are the same.

In another possible implementation manner, in a case that the terminal is scheduled or configured with an uplink transmission with a specified priority on the first serving cell, and/or in a case that the terminal receives a specified instruction, the multiple first uplink transmissions are not required to meet the predetermined requirement.

In another possible implementation manner, the terminal does not expect to be scheduled or configured with an uplink transmission with a specified priority on the first serving cell, and/or the terminal does not expect to receive a specified instruction.

In another possible implementation manner, the specified instruction includes a dynamic slot format indication dynamic SFI and/or an uplink collision indication UL CI.

In another possible implementation manner, the method further includes: receiving capability indication information, where the capability indication information is used to indicate at least one of the following: whether the multiple first uplink transmissions performed by the terminal on the first serving cell meet the predetermined requirement; the shortest time of the first duration; and the longest time of the first duration.

In another possible implementation manner, the longest time of the first duration indicated by the capability indication information is greater than the longest time of the first duration indicated by the network side device.

In another possible implementation manner, the first uplink transmission includes at least one of a PUCCH, a PUSCH, a PRACH, and an SRS.

In another possible implementation manner, the first uplink transmission includes continuous transmission of at least one channel and/or signal.

It should be noted that, for the implementation process of the aforementioned implementation methods given in this embodiment, reference may be made to the relevant descriptions in methods 200, 300, and 500, and details are not repeated herein to avoid repetition.

In this embodiment, the multiple first uplink transmissions performed by the terminal on the first serving cell based on the first duration are received, so that the phases of the multiple first uplink transmissions can be kept continuous within the first duration, thereby solving the problem that there is currently no uplink transmission solution supporting joint DMRS channel estimation, which improves uplink transmission performance.

It should be noted that, the uplink transmission method provided in the embodiment of the present application may be executed by an uplink transmission apparatus, or a control module in the uplink transmission apparatus for executing the uplink transmission method. In the embodiments of the present application, the uplink transmission method being performed by the uplink transmission apparatus is taken as an example to describe the uplink transmission apparatus provided in the embodiments of the present application.

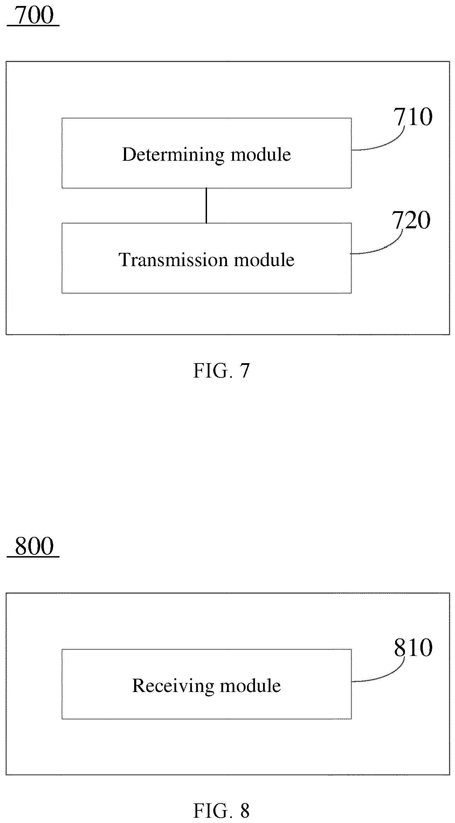

FIG. 7 is a block diagram of an uplink transmission apparatus 700 provided by an exemplary embodiment of the present application. The apparatus 700 includes: a determining module 710, configured to determine a first duration according to first information; and a transmission module 720, configured to perform multiple first uplink transmissions on a first serving cell based on the first duration, where the first information includes at least one of the following: a number of time units indicated by the network side device; a number of retransmissions of the first uplink transmissions indicated by the network side device; a number of continuous/quasi-continuous time units occupied by at least one of the multiple first uplink transmissions; a configured uplink/downlink resource configuration; a time domain resource length of a nominal transmission of a specified channel, where the specified channel includes a physical uplink shared channel PUSCH and/or a physical uplink control channel PUCCH; a specified time resource, where the specified time resource is a corresponding time domain resource for determining a demodulation reference signal DMRS for the first uplink transmission; and terminal capability information.

In a possible implementation manner, the multiple first uplink transmissions meet a predetermined requirement, and the predetermined requirement includes at least one of the following that: a channel of a second uplink transmission is determined according to a channel of a third uplink transmission, the second uplink transmission is any one of the multiple first uplink transmissions, and the third uplink transmission is an uplink transmission of the multiple first uplink transmissions other than the second uplink transmission; the multiple first uplink transmissions use a same antenna port; phases between the multiple first uplink transmissions are continuous; differences between transmit powers corresponding to the multiple first uplink transmissions is smaller than a first threshold; the multiple first uplink transmissions correspond to a same transmit filter; the multiple first uplink transmissions correspond to a same precoding mode; and differences between DMRSs corresponding to the multiple first uplink transmissions and data transmission symbols are smaller than a second threshold.

In another possible implementation manner, the being continuous/quasi-continuous meets at least one of the following requirements that: a gap time on a time domain resource is not greater than a third threshold; a gap time on a time domain resource is not greater than a predetermined symbol number threshold; a number of gaps on a time domain resource is not greater than a fourth threshold; a number of gaps on a time domain resource is not greater than the longest time of the first duration reported by the terminal; and there is no gap on a time domain resource.

In another possible implementation manner, the first uplink transmission performed within the number of continuous/quasi-continuous time units uses a frequency domain resource at a same location.

In another possible implementation manner, the first duration is any one of the following: a specified value of at least two first time length values; and an intersection between at least two second times; where each of the first time length values corresponds to different information in the first information, and each of the second times corresponds to different information in the first information.

In another possible implementation manner, the specified value is a maximum value or a minimum value.

In another possible implementation manner, a start moment of the first duration is a start moment of the first uplink transmission; or the start moment of the first duration is a start moment of a time unit where the first uplink transmission is located.

In another possible implementation manner, the first uplink transmissions transmitted within the first duration use a same first transmission parameter, and the first transmission parameter includes at least one of a transmit power, a transmit filter, a precoding mode, an antenna mapping mode, and a modulation scheme corresponding to the first uplink transmission.

In another possible implementation manner, time lengths of first durations corresponding to at least some of the multiple first uplink transmissions are different; or time lengths of the first durations corresponding to the multiple first uplink transmissions are the same.

In another possible implementation manner, the transmission module 720 is further configured to adjust, by using the first duration as a time unit, a second transmission parameter corresponding to the first uplink transmission, where the second transmission parameter includes the transmit power of the first uplink transmission.

In another possible implementation manner, in a case that the terminal is scheduled or configured with an uplink transmission with a specified priority on the first serving cell, and/or in a case that the terminal receives a specified instruction, the multiple first uplink transmissions are not required to meet the predetermined requirement.

In another possible implementation manner, the terminal does not expect to be scheduled or configured with an uplink transmission with a specified priority on the first serving cell, and/or the terminal does not expect to receive a specified instruction.

In another possible implementation manner, the specified instruction includes a dynamic slot format indication dynamic SFI and/or an uplink collision indication UL CI.

In another possible implementation manner, the transmission module 720 is configured to determine, based on a length of the first duration, frequency-domain locations for a transmission corresponding to the multiple first uplink transmissions; and perform frequency hopping transmission based on the frequency domain transmission location.

In another possible implementation manner, the transmission module 720 is configured to determine a DMRS transmission pattern for each of the first uplink transmissions based on the length of the first duration; and perform transmission based on the DMRS transmission pattern.

In another possible implementation manner, the transmission module 720 is further configured to send capability indication information, where the capability indication information is used to indicate at least one of the following: whether the multiple first uplink transmissions performed by the terminal on the first serving cell meet the predetermined requirement; the shortest time of the first duration; and the longest time of the first duration.

In another possible implementation manner, the longest time of the first duration indicated by the capability indication information is greater than the longest time of the first duration indicated by the network side device.

In another possible implementation manner, the first uplink transmission includes at least one of a PUCCH, a PUSCH, a PRACH, and an SRS.

In another possible implementation manner, the first uplink transmission includes continuous transmission of at least one channel and/or signal.

In another possible implementation manner, the transmission module 720 is further configured to: perform a predetermined operation in a predetermined case; the predetermined case includes that the terminal performs uplink transmission in a second serving cell within the first duration; the predetermined operation includes at least one of the following: discarding an uplink transmission performed on the second serving cell; maintaining uplink transmission performed on the second serving cell; and discarding a first specified transmission performed on the first serving cell, where the first specified transmission is an uplink transmission performed on an overlapping time unit, and the overlapping time unit is a time unit on which the first uplink transmission on the first serving cell overlaps with the uplink transmission on the second serving cell.

In another possible implementation manner, the predetermined case further includes receiving a predetermined indication and performing the predetermined operation, and the predetermined indication is used to indicate that a transmission time of the uplink transmission on the second serving cell reaches a predetermined time.

In another possible implementation manner, in a case that the uplink transmission corresponding to the second serving cell is a predetermined-priority transmission, or the uplink transmission corresponding to the second serving cell is a predetermined channel or signal, any one of the following is performed: maintaining uplink transmission performed on the second serving cell; and discarding a first specified transmission performed on the first serving cell, where the first specified transmission is an uplink transmission performed on an overlapping time unit, and the overlapping time unit is a time unit on which the first uplink transmission on the first serving cell overlaps with the uplink transmission on the second serving cell.

In another possible implementation manner, in a case that the uplink transmission corresponding to the second serving cell is not a predetermined-priority transmission, and the uplink transmission corresponding to the second serving cell is not a predetermined channel or signal, the uplink transmission performed on the second serving cell is discarded.

In another possible implementation manner, the predetermined-priority transmission includes: a predetermined-priority PUSCH and/or a PUCCH transmitting a hybrid automatic repeat request acknowledgment HARQ-ACK corresponding to a predetermined-priority codebook.

In another possible implementation manner, the predetermined channel or signal includes at least one of a physical random access channel PRACH, a message 3 physical uplink shared channel MSG3 PUSCH, a message-A physical uplink shared channel MSG-APUSCH, and a sounding reference signal.

In another possible implementation manner, in a case that the predetermined operation is to maintain the uplink transmission performed on the second serving cell, dividing, based on the start moment of the uplink transmission performed on the second serving cell, the first duration into a first partial duration and a second partial duration, where the first uplink transmission performed between the first partial duration and the second partial duration does not meet the predetermined requirement; or the first uplink transmission performed during the first partial duration and the second partial duration continues to meet the predetermined requirement.

In another possible implementation manner, in a case that the predetermined operation is to maintain the uplink transmission performed on the second serving cell, dividing, based on the start moment of the uplink transmission performed on the second serving cell, the first duration into a first partial duration and a second partial duration, where the first uplink transmission performed between the first partial duration meets the predetermined requirement; and/or the first uplink transmission performed during the second partial duration meets the predetermined requirement.

FIG. 8 is an uplink transmission apparatus 800 provided by an exemplary embodiment of the present application. The apparatus 800 includes: a receiving module 810, configured to receive multiple first uplink transmissions performed by a terminal on a first serving cell based on a first duration, where the first duration is determined based on first information, and the first information includes at least one of the following: a number of time units indicated by the network side device; a number of retransmissions of the first uplink transmissions indicated by the network side device; a number of continuous/quasi-continuous time units occupied by at least one of the multiple first uplink transmissions; a configured uplink/downlink resource configuration; a time domain resource length of a nominal transmission of a specified channel, where the specified channel includes a physical uplink shared channel PUSCH and/or a physical uplink control channel PUCCH; a specified time resource, where the specified time resource is a corresponding time domain resource for determining a demodulation reference signal DMRS for the first uplink transmission; and terminal capability information.

In another possible implementation manner, the multiple first uplink transmissions meet a predetermined requirement, and the predetermined requirement includes at least one of the following: a channel of a second uplink transmission is determined according to a channel of a third uplink transmission, the second uplink transmission is any one of the multiple first uplink transmissions, and the third uplink transmission is an uplink transmission of the multiple first uplink transmissions other than the second uplink transmission; the multiple first uplink transmissions use a same antenna port; phases between the multiple first uplink transmissions are continuous; differences between transmit powers corresponding to the multiple first uplink transmissions is smaller than a first threshold; the multiple first uplink transmissions correspond to a same transmit filter; the multiple first uplink transmissions correspond to a same precoding mode; and differences between DMRSs corresponding to the multiple first uplink transmissions and data transmission symbols are smaller than a second threshold.

In another possible implementation manner, the being continuous/quasi-continuous meets at least one of the following requirements that: a gap time on a time domain resource is not greater than a third threshold; a gap time on a time domain resource is not greater than a predetermined symbol number threshold; a number of gaps on a time domain resource is not greater than a fourth threshold; a number of gaps on a time domain resource is not greater than the longest time of the first duration reported by the terminal; and there is no gap on a time domain resource.

In another possible implementation manner, the first uplink transmission performed within the number of continuous/quasi-continuous time units uses a frequency domain resource at a same location.

In another possible implementation manner, the first duration is any one of the following: a specified value of at least two first time length values; and an intersection between at least two second times; where each of the first time length values corresponds to different information in the first information, and each of the second times corresponds to different information in the first information.

In another possible implementation manner, the specified value is a maximum value or a minimum value.

In another possible implementation manner, a start moment of the first duration is a start moment of the first uplink transmission; or the start moment of the first duration is a start moment of a time unit where the first uplink transmission is located.

In another possible implementation manner, the first uplink transmissions transmitted within the first duration use a same first transmission parameter, and the first transmission parameter includes at least one of a transmit power, a transmit filter, a precoding mode, an antenna mapping mode, and a modulation scheme corresponding to the first uplink transmission.

In another possible implementation manner, time lengths of first durations corresponding to at least some of the multiple first uplink transmissions are different; or time lengths of the first durations corresponding to the multiple first uplink transmissions are the same.

In another possible implementation manner, in a case that the terminal is scheduled or configured with an uplink transmission with a specified priority on the first serving cell, and/or in a case that the terminal receives a specified instruction, the multiple first uplink transmissions are not required to meet the predetermined requirement.

In another possible implementation manner, the terminal does not expect to be scheduled or configured with an uplink transmission with a specified priority on the first serving cell, and/or the terminal does not expect to receive a specified instruction.

In another possible implementation manner, the specified instruction includes a dynamic slot format indication dynamic SFI and/or an uplink collision indication UL CI.

In another possible implementation manner, the receiving module 810 is further configured to receive capability indication information, where the capability indication information is used to indicate at least one of the following: whether the multiple first uplink transmissions performed by the terminal on the first serving cell meet the predetermined requirement; the shortest time of the first duration; and the longest time of the first duration.

In another possible implementation manner, the longest time of the first duration indicated by the capability indication information is greater than the longest time of the first duration indicated by the network side device.

In another possible implementation manner, the first uplink transmission includes at least one of a PUCCH, a PUSCH, a PRACH, and an SRS.

In another possible implementation manner, the first uplink transmission includes continuous transmission of at least one channel and/or signal.

The uplink transmission apparatus in the embodiment of the present application may be a device, or a component, an integrated circuit, or a chip in a terminal. The apparatus may be a mobile terminal, or a non-mobile terminal. For example, the mobile terminal may include but is not limited to the foregoing listed types of terminals 11. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The uplink transmission apparatus in the embodiment of the present application may be an apparatus with an operating system. The operating system may be an Android (Android) operating system, may be an iOS operating system, or may be another possible operating system. This is not specifically limited in this embodiment of this application.

The uplink transmission apparatus according to embodiments of the present disclosure can implement the processes in the method embodiments in FIG. 2 to FIG. 6, and achieve the same technical effect. To avoid duplication, details are not described herein again.

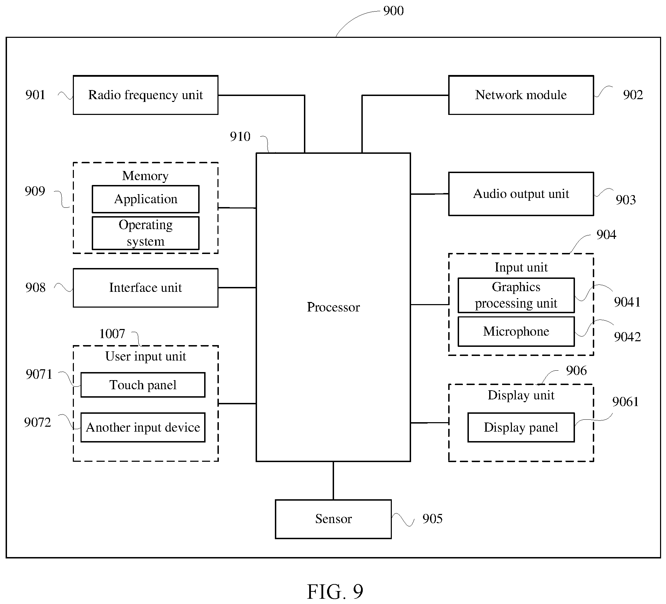

FIG. 9 is a schematic diagram of a hardware structure of a terminal according to an embodiment of this application. A terminal 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

A person skilled in the art can understand that the terminal 900 may further include a power supply (such as a battery) that supplies power to each component. The power supply may be logically connected to the processor 910 by using a power supply management system, to implement functions such as charging and discharging management, and power consumption management by using the power supply management system. The terminal structure shown in FIG. 9 constitutes no limitation on the terminal, and the terminal may include more or fewer components than those shown in the figure, or combine some components, or have different component arrangements. Details are not described herein.

It should be understood that in the embodiments of this application, the input unit 904 may include a graphics processing unit (Graphics Processing Unit, GPU) 9041 and a microphone 9042, and the graphics processing unit 9041 processes image data of a still picture or video obtained by an image capture apparatus (such as a camera) in a video capture mode or an image capture mode. The display unit 906 may include a display panel 9061. The display panel 9061 may be configured in a form such as a liquid crystal display or an organic light-emitting diode. The user input unit 907 includes a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a functional button (such as a volume control button or a power on/off button), a trackball, a mouse, and a joystick. Details are not described herein.

In the embodiment of the present application, the radio frequency unit 901 receives the downlink data from the network side device, and processes it to the processor 910; in addition, sends the uplink data to the network side device. Usually, the radio frequency unit 901 includes but is not limited to an antenna, at least one amplifier, a transceiver, a coupler, a low noise amplifier, a duplexer, and the like.

The memory 909 may be configured to store a software program or an instruction and various data. The memory 909 may mainly include a program or instruction storage area and a data storage area. The program or instruction storage area may store an operating system, and an application program or an instruction required by at least one function (for example, a sound playing function or an image playing function). In addition, the memory 909 may include a high-speed random access memory and non-volatile memory. The nonvolatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 910 may include one or more processing units. Optionally, an application processor and a modem processor may be integrated into the processor 910. The application processor mainly processes an operating system, a user interface, an application, an instruction, or the like. The modem processor mainly processes wireless communications, for example, a baseband processor. It can be understood that, alternatively, the modem processor may not be integrated into the processor 910.

The processor 910 is configured to determine a first duration according to first information; and perform multiple first uplink transmissions on a first serving cell based on the first duration, where the multiple first uplink transmissions meet a predetermined requirement; and the first information includes at least one of the following: a number of time units indicated by the network side device; a number of retransmissions of the first uplink transmissions indicated by the network side device; a number of continuous/quasi-continuous time units occupied by at least one of the multiple first uplink transmissions; a configured uplink/downlink resource configuration; a time domain resource length of a nominal transmission of a specified channel, where the specified channel includes a physical uplink shared channel PUSCH and/or a physical uplink control channel PUCCH; a specified time resource, where the specified time resource is a corresponding time domain resource for determining a demodulation reference signal DMRS for the first uplink transmission; and terminal capability information.

In this embodiment, the first duration is determined according to the first information, and then multiple first uplink transmissions are performed on the first serving cell based on the first duration, where the multiple first uplink transmissions meet the predetermined requirement. Therefore, the phase of the multiple first uplink transmissions can be kept continuous within the first duration, thereby solving the problem that there is currently no uplink transmission solution supporting joint DMRS channel estimation, which improves uplink transmission performance.

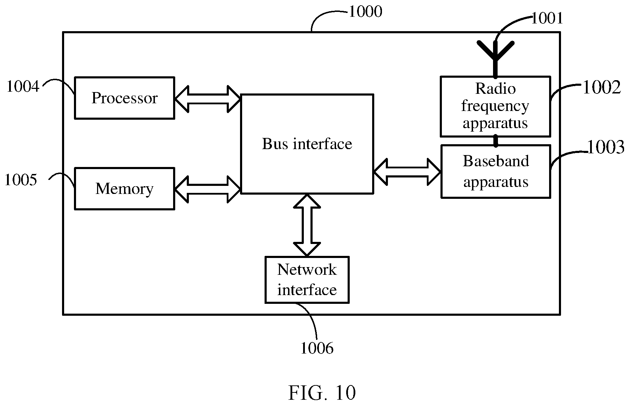

As shown in FIG. 10, an embodiment of the present application further provides a network side device, and the network side device 1000 includes: an antenna 1001, a radio frequency apparatus 1002, and a baseband apparatus 1003. The antenna 1001 is connected to the radio frequency apparatus 1002. In an uplink direction, the radio frequency apparatus 1002 receives information through the antenna 1001, and sends the received information to the baseband apparatus 1003 for processing. In a downlink direction, the baseband apparatus 1003 processes information to be sent and sends the information to the radio frequency apparatus 1002, and the radio frequency apparatus 1002 processes the received information and sends the information through the antenna 1001.

The foregoing band processing apparatus may be located in the baseband apparatus 1003. In the foregoing embodiment, a method performed by the network side device may be implemented in the baseband apparatus 1003. The baseband apparatus 1003 includes a processor 1004 and a memory 1005.

The baseband apparatus 1003 may include, for example, at least one baseband board, where multiple chips are disposed on the baseband board. As shown in FIG. 10, one chip is, for example, the processor 1004, which is connected to the memory 1005, so as to invoke a program in the memory 1005 to perform operations of the network side device shown in the foregoing method embodiment.

The baseband apparatus 1003 may further include a network interface 1006, configured to exchange information with the radio frequency apparatus 1002, where the interface is, for example, a common public radio interface (common public radio interface, CPRIfor short).

Specifically, the network side device in this embodiment of the present invention further includes an instruction or a program stored in the memory 1005 and executable on the processor 1004. The processor 1004 invokes the instruction or the program in the memory 1005 to perform the method performed by the modules shown in FIG. 8, with the same technical effect achieved. To avoid repetition, details are not provided herein again.

An embodiment of the present application further provides a readable storage medium. The readable storage medium stores a program or an instruction, and when the program or the instruction is executed by a processor, the various processes of the foregoing uplink transmission method embodiment is performed and the same technical effects can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, an optical disc, or the like.

An embodiment of the present application further provides a chip, the chip includes a processor and a communication interface, the communication interface is coupled to the processor, and the processor is configured to run the program or instruction of the network side device to realize each process of the embodiment of the uplink transmission method, and can achieve the same technical effect. To avoid repetition, details are not repeated herein.

It should be understood that the chip mentioned in this embodiment of this application may also be referred to as a system-level chip, a system chip, a chip system, or an on-chip system chip.

The embodiments of the present application further provide a computer program product, the computer program product includes a processor, a memory, and a program or an instruction stored in the memory and executable on the processor, when the program or the instruction is executed by the processor, each process of the above-mentioned uplink transmission method embodiment can be realized, and the same technical effect can be achieved. To avoid repetition, details are not repeated herein.

It should be noted that, in this specification, the terms "include", "comprise", or any other variant thereof are intended to cover a non-exclusive inclusion, so that a process, a method, an article, or an apparatus that includes a list of elements not only includes those elements but also includes other elements which are not expressly listed, or further includes elements inherent to such a process, method, article, or apparatus. An element limited by "includes a ..." does not, without more constraints, preclude the presence of additional identical elements in the process, method, article, or apparatus that includes the element. In addition, it should be noted that a scope of the method and the apparatus in the implementations of this application is not limited to: performing a function in a sequence shown or discussed, and may further include: performing a function in a basically simultaneous manner or in a reverse sequence based on an involved function. For example, the described method may be performed in a different order, and various steps may be added, omitted, or combined. In addition, features described with reference to some examples may be combined in other examples.

Based on the descriptions of the foregoing implementations, a person skilled in the art may clearly understand that the method in the foregoing embodiments may be implemented by software in addition to a necessary universal hardware platform or by hardware only. In most cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An uplink transmission method, performed by a terminal and comprising:
determining a first duration according to first information; and
performing multiple first uplink transmissions on a first serving cell based on the first duration;
wherein the first information comprises at least one of the following:
a number of time units indicated by a network side device;
a number of retransmissions of the first uplink transmissions indicated by the network side device;
a number of continuous/quasi-continuous time units occupied by at least one of the multiple first uplink transmissions;
configured uplink/downlink resource configuration;
a time domain resource length of a nominal transmission of a specified channel, wherein the specified channel comprises a physical uplink shared channel PUSCH and/or a physical uplink control channel PUCCH;
a specified time resource, wherein the specified time resource is a corresponding time domain resource for determining a demodulation reference signal DMRS for a first uplink transmission; and
terminal capability information.

2. The method according to claim 1, wherein the multiple first uplink transmissions meet a predetermined requirement, and the predetermined requirement comprises at least one of the following that:
a channel of a second uplink transmission is determined according to a channel of a third uplink transmission, the second uplink transmission is any one of the multiple first uplink transmissions, and the third uplink transmission is an uplink transmission of the multiple first uplink transmissions other than the second uplink transmission;
the multiple first uplink transmissions use a same antenna port;
phases between the multiple first uplink transmissions are continuous;
differences between transmit powers corresponding to the multiple first uplink transmissions is smaller than a first threshold;
the multiple first uplink transmissions correspond to a same transmit filter;
the multiple first uplink transmissions correspond to a same precoding mode; and
differences between DMRSs corresponding to the multiple first uplink transmissions and data transmission symbols are smaller than a second threshold.

3. The method according to claim 1, wherein being continuous/quasi-continuous meets at least one of the following requirements that:
a gap time on a time domain resource is not greater than a third threshold;
a gap time on a time domain resource is not greater than a predetermined symbol number threshold;
a number of gaps on a time domain resource is not greater than a fourth threshold;
a number of gaps on a time domain resource is not greater than the longest time of the first duration reported by the terminal; and
there is no gap on a time domain resource.

4. The method according to claim 1, wherein the first uplink transmission performed within the number of continuous/quasi-continuous time units uses a frequency domain resource at a same location.

5. The method according to claim 1, wherein the first duration is any one of the following:
a specified value of at least two first time length values; and
an intersection between at least two second times;
wherein each of the first time length values corresponds to different information in the first information, and each of the second times corresponds to different information in the first information.

6. The method according to claim 5, wherein the specified value is a maximum value or a minimum value.

7. The method according to claim 1, wherein a start moment of the first duration is a start moment of the first uplink transmission;
or the start moment of the first duration is a start moment of a time unit where the first uplink transmission is located.

8. The method according to claim 1, wherein the first uplink transmissions transmitted within the first duration use a same first transmission parameter, and the first transmission parameter comprises at least one of a transmit power, a transmit filter, a precoding mode, an antenna mapping mode, and a modulation scheme corresponding to the first uplink transmission.

9. The method according to claim 1, wherein time lengths of first durations corresponding to at least some of the multiple first uplink transmissions are different; or
time lengths of the first durations corresponding to the multiple first uplink transmissions are the same.

10. The method according to claim 1, wherein the method further comprises:
adjusting, by using the first duration as a time unit, a second transmission parameter corresponding to the first uplink transmission, wherein the second transmission parameter comprises the transmit power of the first uplink transmission.

11. The method according to claim 2, wherein in a case that the terminal is scheduled or configured with an uplink transmission with a specified priority on the first serving cell, and/or in a case that the terminal receives a specified instruction, the multiple first uplink transmissions are not required to meet the predetermined requirement.

12. The method according to claim 11, wherein the specified instruction comprises a dynamic slot format indication dynamic SFI and/or an uplink collision indication UL CI.

13. The method according to any one of claims 1 to 12, wherein the performing multiple first uplink transmissions on a first serving cell comprises:
determining, based on a length of the first duration, frequency-domain locations for a transmission corresponding to the multiple first uplink transmissions; and
performing frequency hopping transmission based on the frequency domain transmission location.

14. The method according to any one of claims 1 to 12, wherein the performing multiple first uplink transmissions on a first serving cell comprises:
determining a DMRS transmission pattern for each of the first uplink transmissions based on the length of the first duration; and
performing transmission based on the DMRS transmission pattern.

15. The method according to any one of claims 1 to 12, wherein the method further comprises:
sending capability indication information, wherein the capability indication information is used to indicate at least one of the following:
whether the multiple first uplink transmissions performed by the terminal on the first serving cell meet the predetermined requirement;
the shortest time of the first duration; and
the longest time of the first duration.

16. The method according to claim 15, wherein the longest time of the first duration indicated by the capability indication information is greater than the longest time of the first duration indicated by the network side device.

17. The method according to claim 1, wherein the first uplink transmission comprises at least one of a PUCCH, a PUSCH, a physical random access channel PRACH, and a sounding reference signal SRS.

18. The method according to claim 1, wherein the first uplink transmission comprises continuous transmission of at least one channel and/or signal.

19. The method according to any one of claims 1 to 12, wherein the method further comprises:
performing a predetermined operation in a predetermined case; wherein
the predetermined case comprises that the terminal performs uplink transmission in a second serving cell within the first duration; and
the predetermined operation comprises at least one of the following:
discarding an uplink transmission performed on the second serving cell;
maintaining the uplink transmission performed on the second serving cell; and
discarding a first specified transmission performed on the first serving cell, wherein the first specified transmission is an uplink transmission performed on an overlapping time unit, and the overlapping time unit is a time unit on which the first uplink transmission on the first serving cell overlaps with the uplink transmission on the second serving cell.

20. The method according to claim 19, wherein the predetermined case further comprises receiving a predetermined indication and performing the predetermined operation, and the predetermined indication is used to indicate that a transmission time of the uplink transmission on the second serving cell reaches a predetermined time.

21. The method according to claim 19, wherein in a case that the uplink transmission corresponding to the second serving cell is a predetermined-priority transmission, or the uplink transmission corresponding to the second serving cell is a predetermined channel or signal, any one of the following is performed:
maintaining the uplink transmission performed on the second serving cell; and
discarding a first specified transmission performed on the first serving cell, wherein the first specified transmission is an uplink transmission performed on an overlapping time unit, and the overlapping time unit is a time unit on which the first uplink transmission on the first serving cell overlaps with the uplink transmission on the second serving cell.

22. The method according to claim 19, wherein in a case that the uplink transmission corresponding to the second serving cell is not a predetermined-priority transmission, and the uplink transmission corresponding to the second serving cell is not a predetermined channel or signal, the uplink transmission performed on the second serving cell is discarded.

23. The method according to claim 21 or 22, wherein the predetermined-priority transmission comprises: a predetermined-priority PUSCH and/or a PUCCH transmitting a hybrid automatic repeat request acknowledgment HARQ-ACK corresponding to a predetermined-priority codebook.

24. The method according to claim 21 or 22, wherein the predetermined channel or signal comprises at least one of a PRACH, a message 3 physical uplink shared channel MSG3 PUSCH, a message-A physical uplink shared channel MSG-A PUSCH, and an SRS.

25. The method according to claim 19, wherein
in a case that the predetermined operation is to maintain the uplink transmission performed on the second serving cell, dividing, based on a start moment of the uplink transmission performed on the second serving cell, the first duration into a first partial duration and a second partial duration, wherein the first uplink transmission performed between the first partial duration and the second partial duration is not required to meet the predetermined requirement; or the first uplink transmission performed during the first partial duration and the second partial duration continues to meet the predetermined requirement.

26. The method according to claim 19, wherein
in a case that the predetermined operation is to maintain the uplink transmission performed on the second serving cell, dividing, based on the start moment of the uplink transmission performed on the second serving cell, the first duration into a first partial duration and a second partial duration, wherein the first uplink transmission performed between the first partial duration meets the predetermined requirement; and/or the first uplink transmission performed during the second partial duration meets the predetermined requirement.

27. An uplink transmission method, performed by a network side device, the method comprising:
receiving multiple first uplink transmissions performed by a terminal on a first serving cell based on a first duration, wherein the first duration is determined according to first information; wherein
the first information comprises at least one of the following:
a number of time units indicated by a network side device;
a number of retransmissions of the first uplink transmissions indicated by the network side device;
a number of continuous/quasi-continuous time units occupied by at least one of the multiple first uplink transmissions;
configured uplink/downlink resource configuration;
a time domain resource length of a nominal transmission of a specified channel, wherein the specified channel comprises a physical uplink shared channel PUSCH and/or a physical uplink control channel PUCCH;
a specified time resource, wherein the specified time resource is a corresponding time domain resource for determining a demodulation reference signal DMRS for the first uplink transmission; and
terminal capability information.

28. The method according to claim 27, wherein the multiple first uplink transmissions meet a predetermined requirement, and the predetermined requirement comprises at least one of the following that:
a channel of a second uplink transmission is determined according to a channel of a third uplink transmission, the second uplink transmission is any one of the multiple first uplink transmissions, and the third uplink transmission is an uplink transmission of the multiple first uplink transmissions other than the second uplink transmission;
the multiple first uplink transmissions use a same antenna port;
phases between the multiple first uplink transmissions are continuous;
differences between transmit powers corresponding to the multiple first uplink transmissions is smaller than a first threshold;
the multiple first uplink transmissions correspond to a same transmit filter;
the multiple first uplink transmissions correspond to a same precoding mode; and
differences between DMRSs corresponding to the multiple first uplink transmissions and data transmission symbols are smaller than a second threshold.

29. The method according to claim 27, wherein the being continuous/quasi-continuous meets at least one of the following requirements that:
a gap time on a time domain resource is not greater than a third threshold;
a gap time on a time domain resource is not greater than a predetermined symbol number threshold;
a number of gaps on a time domain resource is not greater than a fourth threshold;
a number of gaps on a time domain resource is not greater than the longest time of the first duration reported by the terminal; and
there is no gap on a time domain resource.

30. The method according to claim 27, wherein the first uplink transmission performed within the number of continuous/quasi-continuous time units uses a frequency domain resource at a same location.

31. The method according to claim 27, wherein a start moment of the first duration is a start moment of the first uplink transmission;
or the start moment of the first duration is a start moment of a time unit where the first uplink transmission is located.

32. The method according to claim 27, wherein the first uplink transmissions transmitted within the first duration use a same first transmission parameter, and the first transmission parameter comprises at least one of a transmit power, a transmit filter, a precoding mode, an antenna mapping mode, and a modulation scheme corresponding to the first uplink transmission.

33. An uplink transmission apparatus, comprising:
a determining module, configured to determine a first duration according to first information; and
a transmission module, configured to perform multiple first uplink transmissions on a first serving cell based on the first duration; wherein
the first information comprises at least one of the following:
a number of time units indicated by a network side device;
a number of retransmissions of the first uplink transmissions indicated by the network side device;
a number of continuous/quasi-continuous time units occupied by at least one of the multiple first uplink transmissions;
configured uplink/downlink resource configuration;
a time domain resource length of a nominal transmission of a specified channel, wherein the specified channel comprises a physical uplink shared channel PUSCH and/or a physical uplink control channel PUCCH;
a specified time resource, wherein the specified time resource is a corresponding time domain resource for determining a demodulation reference signal DMRS for the first uplink transmission; and
terminal capability information.

34. The apparatus according to claim 33, wherein the multiple first uplink transmissions meet a predetermined requirement, and the predetermined requirement comprises at least one of the following that:
a channel of a second uplink transmission is determined according to a channel of a third uplink transmission, the second uplink transmission is any one of the multiple first uplink transmissions, and the third uplink transmission is an uplink transmission of the multiple first uplink transmissions other than the second uplink transmission;
the multiple first uplink transmissions use a same antenna port;
phases between the multiple first uplink transmissions are continuous;
differences between transmit powers corresponding to the multiple first uplink transmissions is smaller than a first threshold;
the multiple first uplink transmissions correspond to the same transmit filter;
the multiple first uplink transmissions correspond to a same precoding mode; and
differences between DMRSs corresponding to the multiple first uplink transmissions and data transmission symbols are smaller than a second threshold.

35. The apparatus according to claim 33, wherein the being continuous/quasi-continuous meets at least one of the following requirements that:
a gap time on a time domain resource is not greater than a third threshold;
a gap time on a time domain resource is not greater than a predetermined symbol number threshold;
a number of gaps on a time domain resource is not greater than a fourth threshold;
a number of gaps on a time domain resource is not greater than the longest time of the first duration reported by the terminal; and
there is no gap on a time domain resource.

36. The apparatus according to claim 33, wherein the first uplink transmission performed within the number of continuous/quasi-continuous time units uses a frequency domain resource at a same location.

37. The apparatus according to claim 33, wherein the first duration is any one of the following:
a specified value of at least two first time length values; and
an intersection between at least two second times;
wherein each of the first time length values corresponds to different information in the first information, and each of the second times corresponds to different information in the first information.

38. The apparatus according to claim 37, wherein the specified value is a maximum value or a minimum value.

39. The apparatus according to claim 33, wherein a start moment of the first duration is a start moment of the first uplink transmission;
or the start moment of the first duration is a start moment of a time unit where the first uplink transmission is located.

40. The apparatus according to claim 33, wherein the first uplink transmissions transmitted within the first duration use a same first transmission parameter, and the first transmission parameter comprises at least one of a transmit power, a transmit filter, a precoding mode, an antenna mapping mode, and a modulation scheme corresponding to the first uplink transmission.

41. The apparatus according to claim 33, wherein time lengths of first durations corresponding to at least some of the multiple first uplink transmissions are different; or
time lengths of the first durations corresponding to the multiple first uplink transmissions are the same.

42. The apparatus according to claim 33, wherein the transmission module is further configured to adjust, by using the first duration as a time unit, a second transmission parameter corresponding to the first uplink transmission, wherein the second transmission parameter comprises the transmit power of the first uplink transmission.

43. The apparatus according to claim 34, wherein in a case that the terminal is scheduled or configured with an uplink transmission with a specified priority on the first serving cell, and/or in a case that the terminal receives a specified instruction, the multiple first uplink transmissions are not required to meet the predetermined requirement.

44. The apparatus according to claim 43, wherein the specified instruction comprises a dynamic slot format indication dynamic SFI and/or an uplink collision indication UL CI.

45. The apparatus according to any one of claims 33 to 44, wherein the transmission module is configured to determine, based on a length of the first duration, frequency-domain locations for a transmission corresponding to the multiple first uplink transmissions; and
perform frequency hopping transmission based on the frequency domain transmission location.

46. The apparatus according to claim 33 to 44, wherein the transmission module is configured to determine a DMRS transmission pattern for each of the first uplink transmissions based on the length of the first duration; and perform transmission based on the DMRS transmission pattern.

47. The apparatus according to any one of claims 33 to 44, wherein the transmission module is further configured to send capability indication information, and the capability indication information is used to indicate at least one of the following:
whether the multiple first uplink transmissions performed by the terminal on the first serving cell meet the predetermined requirement;
the shortest time of the first duration; and
the longest time of the first duration.

48. The apparatus according to claim 47, wherein the longest time of the first duration indicated by the capability indication information is greater than the longest time of the first duration indicated by the network side device.

49. The apparatus according to claim 33, wherein the first uplink transmission comprises at least one of a PUCCH, a PUSCH, a PRACH, and an SRS.

50. The apparatus according to claim 33, wherein the first uplink transmission comprises continuous transmission of at least one channel and/or signal.

51. The apparatus according to any one of claims 33 to 44, wherein the transmission module is further configured to perform a predetermined operation in a predetermined case;
the predetermined case comprises that the terminal performs uplink transmission in a second serving cell within the first duration; and
the predetermined operation comprises at least one of the following:
discarding an uplink transmission performed on the second serving cell;
maintaining the uplink transmission performed on the second serving cell; and
discarding a first specified transmission performed on the first serving cell, wherein the first specified transmission is an uplink transmission performed on an overlapping time unit, and the overlapping time unit is a time unit on which the first uplink transmission on the first serving cell overlaps with the uplink transmission on the second serving cell.

52. The apparatus according to claim 51, wherein the predetermined case further comprises receiving a predetermined indication and performing the predetermined operation, and the predetermined indication is used to indicate that a transmission time of the uplink transmission on the second serving cell reaches a predetermined time.

53. The apparatus according to claim 51, wherein in a case that the uplink transmission corresponding to the second serving cell is a predetermined-priority transmission, or the uplink transmission corresponding to the second serving cell is a predetermined channel or signal, any one of the following is performed:
maintaining the uplink transmission performed on the second serving cell; and
discarding a first specified transmission performed on the first serving cell, wherein the first specified transmission is an uplink transmission performed on an overlapping time unit, and the overlapping time unit is a time unit on which the first uplink transmission on the first serving cell overlaps with the uplink transmission on the second serving cell.

54. The apparatus according to claim 51, wherein in a case that the uplink transmission corresponding to the second serving cell is not a predetermined-priority transmission, and the uplink transmission corresponding to the second serving cell is not a predetermined channel or signal, the uplink transmission performed on the second serving cell is discarded.

55. The apparatus according to claim 53 or 54, the predetermined-priority transmission comprises: a predetermined-priority PUSCH and/or a PUCCH transmitting a hybrid automatic repeat request acknowledgment HARQ-ACK corresponding to a predetermined-priority codebook.

56. The apparatus according to claim 53 or 54, wherein the predetermined channel or signal comprises at least one of a physical random access channel PRACH, a message 3 physical uplink shared channel MSG3 PUSCH, a message-A physical uplink shared channel MSG-APUSCH, and a sounding reference signal SRS.

57. The apparatus according to claim 51, wherein
in a case that the predetermined operation is to maintain the uplink transmission performed on the second serving cell, dividing, based on the start moment of the uplink transmission performed on the second serving cell, the first duration into a first partial duration and a second partial duration, wherein the first uplink transmission performed between the first partial duration and the second partial duration does not meet the predetermined requirement; or the first uplink transmission performed during the first partial duration and the second partial duration continues to meet the predetermined requirement.

58. The apparatus according to claim 51, wherein
in a case that the predetermined operation is to maintain the uplink transmission performed on the second serving cell, dividing, based on the start moment of the uplink transmission performed on the second serving cell, the first duration into a first partial duration and a second partial duration, wherein the first uplink transmission performed between the first partial duration meets the predetermined requirement; and/or the first uplink transmission performed during the second partial duration meets the predetermined requirement.

59. An uplink transmission apparatus, comprising:
a receiving module, configured to receive multiple first uplink transmissions performed by a terminal on a first serving cell based on a first duration, wherein the first duration is determined according to first information; wherein
the first information comprises at least one of the following:
a number of time units indicated by a network side device;
a number of retransmissions of the first uplink transmissions indicated by the network side device;
a number of continuous/quasi-continuous time units occupied by at least one of the multiple first uplink transmissions;
configured uplink/downlink resource configuration;
a time domain resource length of a nominal transmission of a specified channel, wherein the specified channel comprises a physical uplink shared channel PUSCH and/or a physical uplink control channel PUCCH;
a specified time resource, wherein the specified time resource is a corresponding time domain resource for determining a demodulation reference signal DMRS for the first uplink transmission; and
terminal capability information.

60. The apparatus according to claim 59, wherein the multiple first uplink transmissions meet a predetermined requirement, and the predetermined requirement comprises at least one of the following that:
a channel of a second uplink transmission is determined according to a channel of a third uplink transmission, the second uplink transmission is any one of the multiple first uplink transmissions, and the third uplink transmission is an uplink transmission of the multiple first uplink transmissions other than the second uplink transmission;
the multiple first uplink transmissions use a same antenna port;
phases between the multiple first uplink transmissions are continuous;
differences between transmit powers corresponding to the multiple first uplink transmissions is smaller than a first threshold;
the multiple first uplink transmissions correspond to the same transmit filter;
the multiple first uplink transmissions correspond to a same precoding mode; and
differences between DMRSs corresponding to the multiple first uplink transmissions and data transmission symbols are smaller than a second threshold.

61. The apparatus according to claim 59, wherein the being continuous/quasi-continuous meets at least one of the following requirements that:
a gap time on a time domain resource is not greater than a third threshold;
a gap time on a time domain resource is not greater than a predetermined symbol number threshold;
a number of gaps on a time domain resource is not greater than a fourth threshold;
a number of gaps on a time domain resource is not greater than the longest time of the first duration reported by the terminal; and
there is no gap on a time domain resource.

62. The apparatus according to claim 59, wherein the first uplink transmission performed within the number of continuous/quasi-continuous time units uses a frequency domain resource at a same location.

63. The apparatus according to claim 59, wherein the first duration is any one of the following:
a specified value of at least two first time length values; and
an intersection between at least two second times;
wherein each of the first time length values corresponds to different information in the first information, and each of the second times corresponds to different information in the first information.

64. The apparatus according to claim 59, wherein time lengths of first durations corresponding to at least some of the multiple first uplink transmissions are different; or
time lengths of the first durations corresponding to the multiple first uplink transmissions are the same.

65. The apparatus according to claim 60, wherein in a case that the terminal is scheduled or configured with an uplink transmission with a specified priority on the first serving cell, and/or in a case that the terminal receives a specified instruction, the multiple first uplink transmissions are not required to meet the predetermined requirement.

66. A terminal, comprising a processor, a memory, and a program or instruction stored on the memory and executable on the processor, wherein when the program or instruction is executed by the processor, steps of the uplink transmission method according to any one of claims 1 to 26 are implemented.

67. A network side device, comprising a processor, a memory, and a program or instruction stored on the memory and executable on the processor, wherein when the program or instruction is executed by the processor, steps of the uplink transmission method according to any one of claims 27 to 32 are implemented.

68. A readable storage medium, storing a program or an instruction on the readable storage medium, wherein when the program or instruction is executed by a processor, steps of the uplink transmission method according to any one of claims 1 to 26 are implemented, or steps of the uplink transmission method according to any one of claims 27 to 32 are implemented.
